# EUROPEAN PATENT SPECIFICATION

(11) **EP 0 319 589 B1**
(45) Date of publication and mention of the grant of the patent: **02.11.1995**
(21) Application number: 88906032.3
(22) Date of filing: 24.06.1988
(51) Int. Cl.: C08L 101/00, C08L 23/12, C08L 1/00

(54) **THERMOPLASTIC COMPOSITE MATERIAL REINFORCED WITH HEMP FIBERS**
MIT HANFFASERN VERSTÄRKTES THERMOPLASTISCHES KOMPOSITMATERIAL
MATERIAU COMPOSITE THERMOPLASTIQUE RENFORCE PAR DES FIBRES DE CHANVRE

(30) Priority: 26.06.1987 JP 157782/87
(43) Date of publication of application: 14.06.1989
(73) Proprietor: NAMBA PRESS WORKS CO. LTD., Kurashiki City Okayama Prefecture (JP)
(72) Inventor: GOTO, Fumio, Okayama Prefecture 710-01 (JP); KASAHARA, Yasumasa, Okayama Prefecture 710 (JP)
(74) Representative: Allden, Thomas Stanley
(86) International application number: JP8800628
(87) International publication number: WO8810286

(56) References cited:
- DE-A- 2 539 195
- JP-A- 4 927 535
- JP-A- 5 060 545
- JP-B- 5 434 020
- JP-B- 5 754 050
- DATABASE WPI, abstract no. 80-08153c, Derwent Publications Ltd., London, GB ; & JP-A-5418457

## Description

This invention relates to novel composite thermoplastic materials reinforced with "hemp fibers" so as to have a high degree of impact strength, thermostability and moldability and more particularly to such composite thermoplastic materials suited particularly to use for manufacturing automobile interior fittings of light weight and the like, at low cost.

It is known that some composite thermoplastic materials, such as those prepared by mixing thermoplastic matrix such as polypropylene and wood chips or wood dusts and forming the resultant mixture into the form of sheets or pellets, are cheaper and lighter in weight as compared to plastic itself and advantageously employed for stamping or injection molding techniques to manufacture various articles including interior fittings of automobiles such as instrument panels, heater ducts, and so on.

An example of composite thermoplastic materials comprising polyolefins and wood chips is disclosed in Japanese Patent Publication SHO 60-40965 "Method and Apparatus for manufacturing panels" [filed on March 22, 1974 claiming Convention Priority based on Swiss application No. 4249/73, by GOR, Italy, published on September 13, 1985 (SHO 60)] in which about 40 to 60% by weight of polyolefins such as polypropylene and polyethylene and about 60 to 40% by weight of particulate cellulosic fillers are mixed together to form a composite thermoplastic material.

It is found, however, that particulate cellulosic fillers as taught in that publication are very difficult to be kept uniform as to their sizes and shapes and are not able to be uniformly dispersed in such materials as thermoplastic matrices which have rather high melt viscosity and the resulting composites cannot have sufficient uniformity in quality and physical properties throughout their entire mass. Such non-uniform composites may lead to production of rejects through stamping or injection molding processes due to varying and uneven physical properties and moldability. These composites having no assurance of uniformity inadvantageously require to adopt wide safety standards in quality control and product designing.

Though particulate cellulosic fillers are able to be more easily handled than filamentary reinforcing materials, they are inferior to them in impact strength, thermal distortion temperature, deep-drawing ability, and so on. Thus, thermoplastic composites reinforced with particulate cellulosic fillers have a limited degree of freedom in designing for production of thin wall articles, and have limited usages.

In an attempt to overcome these defects, it is proposed to use particulate cellulosic fillers in combination with a fibrous reinforcing material. Japanese Laid-open publication SHO 59-207966 "Composite materials utilizing synthetic fiber rag" [filed on May 13, 1983 by K.K. Mikuni Mfg., Japan, provisionally published on November 26, 1984 (SHO 59)] shows this proposal in which Claim 2 defines a composite material comprising about 70 to 160 parts by weight of thermoplastic synthetic resins such as polypropylene, polyethylene and ABS, 100 parts by weight of rags of synthetic fiber such as polyester filament, and 50 parts by weight of wood chips or wastepaper. However, since synthetic fibers like polyester, being thermoplastic in nature, have low rigidity and low resistance to thermal deformation, it seems that there is no significant reinforcing effect attained by synthetic fibers except that they may contribute to lowering costs of composites. In other words, synthetic fiber rags can scarcely compensate for defects of particulate ligneous fillers and they will worsen physical properties of composites in greatly reducing bending resistance thereof upon heating. Thus, sheetings made from composite material containing synthetic fiber will be softened upon heating during stamping process such that they cannot be supported by an operator's hands in a flattened state. Further, synthetic fibers will lower specific heat capacity of the composites to cause heat radiation therefrom to be rapid. For this reason, it will be difficult to handle composite sheetings in double layers. Besides, accurate control over molding conditions and/or precise process control will cumbersomely be required in using composite materials containing synthetic fiber reinforcement.

JP-A-50060545 discloses a plastic composition comprising bast fiber, disposal fiber and fruit fiber. The composition may also be used in combination with other fillers, such that the composition has a total filler content of 5 to 75 parts filler per 100 parts plastic. Such a composition, however, is not adaptable to deep drawability.

It is an object of the present invention to provide novel composite thermoplastic materials which are of high quality and uniform in physical properties and do not undergo losses of strength, rigidity and specific heat capacity upon heating.

It is another object of the invention to provide composite thermoplastic materials which are light in weight and have high degrees of impact strength, thermostability and moldability.

It is yet another object of the invention to provide composite thermoplastic materials having characteristics as enumerated above and worked in the form of sheets for use in stamping process or pellets for use in injection or transfer molding processes.

It is a specific object of the present invention to provide composite thermoplastic sheetings capable of being easily handled in stamping molding processes and formed into complicated configurations including deep-drawn shapes. These and other objects of the invention are attained by providing novel composite thermoplastic materials comprising:
(1) thermoplastic matrices such as polypropylene, polyethylene, nylon, acrylonitrile-butadiene-styrene copolymer (ABS) and so on,
(2) "hemp fibers" in the form of single fibers which are rigid, stiff, thermostable and yet lightweight, and
(3) ligneous fillers in the form of particles, dusts or scales, the latter two constituents being uniformly dispersed in the plastic matrices.

According to the present invention there is provided a composite thermoplastic material for use in forming thin extruded sheeting, which material comprises a thermoplastic matrix with hemp fibres and particles, dust or scale of ligneous fillers uniformly dispersed in the matrix, characterised in that for each 100 parts by weight of matrix, there are from 15 to 110 parts by weight of hemp fibres and from 5 to 65 parts by weight of ligneous fillers, to provide in total from 80 to 115 parts by weight of hemp and filler(s).

According to the invention, it is noted that single fibers selected from the group consisting of ramie (Boehmeria nivea), flax (Linum usitatissimum), hemp (Cannabis sativa), jute (Corchorus capsularis), manila hemp (Musa textilis), and sisal hemp (Agave sisalana) can advantageously be employed as novel reinforcing materials for plastics, and these fibers are generally referred to as "hemp fibers" in this specification and claims for convenience of explanation. Latin in each parenthesis indicates a botanical name of the plant from which each fiber preceding the parenthesis is obtained.

"Hemp fibers" are noted to have substantial uniformity in shapes and be able to relatively easily be made all of uniform length. Moreover, they have a good compatibility with particulate ligneous or cellulosic fillers employed heretofore, especially when adequate mixing or kneading processes are utilized. Thus, hemp fibers accompanying ligneous fillers distributed uniformly therein can be added to the thermoplastic matrices in a manner that both hemp fibers and ligneous fillers are substantially uniformly dispersed in the matrices, which otherwise would not be attained by adding ligneous fillers alone.

Hemp fibers employed in this invention have good characteristics such as light weight, high rigidity and high thermal resistance, and can be optimum reinforcing fibers to impart to the composites high degrees of impact and tensile strengths which cannot be attained by using particulate ligneous cellulosic fillers alone. Hemp fibres can also improve largely thermal distortion temperatures and deep-drawing capability of the resultant composites and hence can provide novel thermoplastic composite materials which are particularly suitable for making thin wall articles, such as interior fittings for automobiles.

Further, hemp fibres have higher specific heat capacity than synthetic fibres as mentioned before and high thermal bending resistance substantially similar to ligneous celluloses. These characteristics of the hemp fibres ensure that composites containing hemp fibres have a good operability and easy handling capability in, for example, stamping process.

In a preferred embodiment of the invention, about 15 to 110 parts by weight of hemp fibres of about 0.3 to 10mm length are admixed with about 5 to 65 parts by weight of ligneous fillers in the form of particles, dusts or scales of about 0.3 to 10mm size to form an admixture having constituents distributed substantially uniformly, which is added to 100 parts by weight of thermoplastic matrix and dispersed uniformly there through, so that there are in total from 80 to 115 parts by weight of hemp and fillers for each 100 parts by weight of matrix. A novel composite thermoplastic material of the invention is formed. Preferably, the resultant composites are extruded into sheetings for use in stamping process, or pelletized to form pellets for use in injection or transfer molding processes.

Thermoplastic matrices which can be used in the invention include polypropylene, polyethylene, copolymer of ethylene and propylene, acrylonitrile-butadiene-styrene copolymer (ABS), nylon and the like. Among these, polypropylene is a most preferred matrix.

Hemp fibers which can be used in the invention include any single fibers selected from ramie, flax, hemp, jute, manila hemp, sisal hemp or the like. In view of stiffness, tenacity or rigidity, and lightweight, manila hemp and jute are particularly preferable reinforcing materials though any limitation is not intended. Lengths of hemp fibers used can be set within wide ranges of from .3mm to 10mm, and preferably about 4mm to 7mm.

Ligneous fillers which can be employed in the invention include those obtained from coniferous or acicular trees, deciduous trees, or crashed hardboard or pulp and other work timber, in the form of particles, scales, chips or dusts, having sizes ranging from .3mm to 10mm, preferably about 2mm to 4mm.

Preferably, hemp fibers are admixed with ligneous fillers in varying proportions including an exemplary ratio of 46 parts by weight of hemp fibers to 65 parts by weight of ligneous fillers. This admixture (110 parts by weight) can be added to 100 parts by weight of polypropylene and kneaded thoroughly to form the composite thermoplastic material of the invention. The resultant composite can be formed into extruded sheetings which are particularly suited for use in stamping operations requiring deep drawing processes to yield excellent products having very high impact strength.

Where particular treatments such as adding lubricant to polypropylene and other thermoplastics, up to 140 parts by weight of hemp single fibers can be added to 100 parts by weight of matrix plastics and yet favorable results can be obtained.

As a comparison, 111 parts by weight of particulate ligneous filler alone are added to 100 parts by weight of polypropylene to form composite thermoplastic material, which is noted as having no uniformity in distribution of fillers and hence poor moldability to inevitably yield many rejects.

Other additives including inorganic fillers, for example, talc can be added in the ratio of about 10 to 40 parts by weight to thermoplastic matrices so as, for example, to improve physical properties such as bending modulus. Appropriate plasticizers and lubricants may be added to the composite material in order to further improve its moldability.

### EXAMPLE 1

Into a 500 liter turbomixer, 23kg of manila hemp fibers of about 5mm length and dried to 5 or 6% levels of moisture content are charged. Onto this charge are placed 32.5kg of particulate wood dust screened to particle sizes of 2mm to 3mm dried to about 5% moisture content. The mixer is rotated at 1000rpm for 3 minutes to thoroughly stir the charge. Upon completion of mixing, it is noted that hemp fibers and wood dust are well commingled with each other to form substantially uniform and even admixture.

Then, into this mixer containing the uniform admixture of hemp fibers and wood dust, 50kg of pelletized polypropylene are added portionwise during which the mixer is rotated for 15 minutes at 1500rpm and at temperatures not exceeding 190°C to thoroughly mix the hemp fibers, wood dust and polypropylene.

A resultant mixture is quickly taken out from the mixer and placed in a cooled stirring room wherein the mixture is quenched to form a mass of composite particulate agglomerate, which is then subjected to an ordinary extruder to form sheetings of 2.0mm thickness.

Composite thermoplastic sheetings thus obtained are noted to be particularly suited for use in stamping molding process and to exhibit good handling ability upon heating, good moldability and physical properties and in general well balanced characteristics. In particular, molded articles obtained from novel thermoplastic composites of the invention have high impact strengths at low temperatures and high heat distortion temperatures which have not been expected for prior composites containing ligneous or cellulosic fillers alone, and yet have substantially the same levels of bending modulii and tensile strengths as the prior composites containing ligneous fillers. Novel thermoplastic composites of the invention have little variations in quality throughout their entire mass and can find wider ranges of use than heretofore employed composites having solely ligneous fillers or synthetic fibers, especially for automobile interior fittings such as instrument panels, door trimming bases with arm rest, center shelves, seat back panels, overhead consoles, heater duct covers and the like.

The same procedures as described above is repeated using jute fibers in place of manila hemp and it is found that substantially the same favorable results are obtained.

### EXAMPLE 2

About 55kg of manila hemp fibers dried to 5 or 6% moisture level and having about 5 to 7mm length are placed in the turbomixer. While adding 2.5kg of wood chips of about 3mm particle size and dried to 5 or 6% moisture, the mixer is rotated at 1200rpm for 5 minutes. Upon completion of mixing, wood particles are substantially uniformly distributed through the mass of hemp fibers.

Then, while adding 50kg of polypropylene to the mixer, it is rotated at 1600rpm for 18 minutes at temperatures lower than 193°C.

A resultant mixture thus obtained is quenched to form composite particulate agglomerate and extruded into sheetings in the same manner as in EXAMPLE 1.

Composite thermoplastic sheets in this example contain larger amount of hemp fibers as compared to those of EXAMPLE 1 and exhibit outstanding effects reinforced by fibers. Though they contain only small amount of ligneous fillers, the composite thermoplastic sheets exhibit sufficient rigidity upon heating to permit good handling ability to be attained in stamping molding process, and to allow the sheets to be worked in double layer due to their tardiness in heat radiation. The sheets of this example are particularly better in deep-drawing moldability than the composites having solely ligneous fillers or synthetic fibers. Though bending modulus is a little lowered, this composite sheeting has highly improved impact strength and moderate heat distortion temperature so that it is suited for use to manufacture deep-drawn articles such as rear quarter panels with arm rests, door trims with arm rests, center shelves, pillar panels in front, center or rear positions.

### EXAMPLE 3

7.5kg of ramie fibers having about 3mm length and dried to 5% moisture are first charged in the turbomixer and thereon 32.5kg of wood chips of about 3mm particle size and dried to 5% moisture and 12.5kg of fully dried talc are charged. Then, the mixer is rotated at 800rpm for 3 minutes. At the end of 3 minutes, three constituents are noted to be well mixed up to form uniform admixture.

Into this admixture, 50kg of powdery polypropylene is slowly added and the mixer is rotated at 1500rpm for 15 minutes to stir and knead the content.

A resultant mixture is quenched to form particulate agglomerate, which is then extruded into sheetings as in preceding examples.

This composite sheetings contain very small amount of hemp fibers and have rather lowered impact strength and moldability, but they have good tensile strength, bending modulus and heat distortion temperature. Moreover, this composite sheetings can have sufficient reinforcing effect by ramie fibers and have very little variations in physical properties throughout its entire mass and moderate impact strength thereby to be adapted for use in manufacturing non-deep-drawn articles such as heater ducts, overhead consoles, quarter trims, center shelves, etc.

### Industrial Applicability

Advantages attained by the present invention, reside in that, because hemp fibers which are light, rigid and heat-resistant material are employed in admixture with ligneous fillers in the form of particle, dust and scale so as to achieve uniform dispersion of reinforcing materials throughout thermoplastic materials, resultant composite thermoplastics can be free from defects and inadvantages caused by uneven distribution of particulate ligneous fillers of non-uniform shapes and sizes. The composite thermoplastic materials of the invention can be prepared with substantially no variations in physical properties from batch to batch and assure improved and stable physical properties, thermal characteristics and moldability (deep drawability) to be achieved in mass-produced articles with minimum rates of rejects.

In particular, hemp fibers have light weight and yet high rigidity and heat-resistance which would not be expected for other fibers such as synthetic plastic fibers, and exhibit novel reinforcing function in the plastic matrices to thereby impart them improved deep-drawing moldability as well as high impact strength, heat distortion temperature and bending modulus.

Further, hemp fibers have specific heat capacity which is higher than synthetic or artificial fibers and similar to that of ligneous fillers so that composite thermoplastic materials reinforced with hemp fibers can be handled highly stably in the heating process of the stamping molding, and, due to tardy radiation of heat from high specific heat material, novel composite sheetings in double layer or ply can be subjected to stamping molding process with successful results. The novel composite thermoplastic material of the invention enables a wider range of production control standards including molding conditions to be set because it has excellent and adaptable characteristics and also enables articles with stabilized quality and/or new designs to be produced.

## Claims

1. A composite thermoplastic material for use in forming thin extruded sheeting, which material comprises a thermoplastic matrix with hemp fibres and particles, dust or scale of ligneous fillers uniformly dispersed in the matrix, characterised in that for each 100 parts by weight of matrix, there are from 15 to 110 parts of hemp fibres and from 5 to 65 parts of ligneous fillers, to provide in total from 80 to 115 parts by weight of hemp and filler(s).

2. A composite thermoplastic material as claimed in claim 1, wherein said thermoplastic matrix is selected from the group consisting of polypropylene, polyethylene, ethylene-propylene copolymer, acrylonitrile-butadiene-styrene copolymer and nylon.

3. A composite thermoplastic material as claimed in claim 2, wherein said thermoplastic matrix is polypropylene.

4. A composite thermoplastic material as claimed in claim 1, further comprising from 10 to 40 parts by weight of inorganic fillers.

5. A composite thermoplastic material as claimed in claim 4, wherein said inorganic filler is talc.

6. A composite thermoplastic material as claimed in any of claims 1 to 5, further comprising an amount of plasticizer and/or lubricant.

7. A composite thermoplastic material as claimed in any of claims 1 to 6, wherein said hemp fibres are any one selected from the group consisting of ramie, flax, hemp (obtained from Cannabis sativa), jute, manila hemp and sisal hemp.

8. A composite thermoplastic material as claimed in any of claims 1 to 6, wherein said hemp fibres are selected from the group consisting of ramie, flax, hemp (obtained from Cannabis sativa), jute, manila hemp and sisal hemp.

9. A composite thermoplastic material as claimed in claim 1, wherein 46 parts by weight of hemp fibres and 65 parts by weight of particulate, dust or scale ligneous filler are added to 100 parts by weight of polypropylene.

10. A composite thermoplastic material as claimed in claim 1, wherein 110 parts by weight of hemp single fibres and 5 parts by weight of ligneous fillers in the form of particle, dust or scale are added to 100 parts by weight of polypropylene.

11. A composite thermoplastic material as claimed in claim 1, wherein 15 parts by weight of hemp single fibres, 65 parts by weight of ligneous fillers in the form of particles, dust or scale, and 25 parts by weight of inorganic filler are added to 100 parts by weight of polypropylene.

12. A composite thermoplastic sheeting obtained by extruding a material as claimed in any preceding claim.

## Patentansprüche

1. Thermoplastischer Verbundwerkstoff für den Einsatz bei der Verformung von dünnen extrudierten Folien, wobei der Werkstoff aus einer thermoplastischen Matrix mit Hanffasern und Partikeln, Mehl oder Schuppen aus ligninhaltigen Füllstoffen besteht, die gleichmäßig in der Matrix verteilt werden, dadurch gekennzeichnet, daß auf 100 Gewichtsteile der Matrix 15 bis 110 Teile Hanffasern und 5 bis 65 Teile ligninhaltige Fasern entfallen, insgesamt 80 bis 115 Gewichtsteile Hanf- und Füllstoff(e).

2. Thermoplastischer Verbundwerkstoff nach Anspruch 1, bei dem die thermoplastische Matrix aus einer Gruppe, bestehend aus Polypropylen, Polyethylen, Ethylenpropylen-Kopolymer, Akrylnitril-Butadien-Styrol-Kopolymer und Nylon gewählt wird.

3. Thermoplastischer Verbundwerkstoff nach Anspruch 2, bei dem die genannte thermoplastische Matrix Polypropylen ist.

4. Thermoplastischer Verbundwerkstoff nach Anspruch 1, ferner bestehend aus 10 bis 40 Gewichtsteilen anorganischer Füllstoffe.

5. Thermoplastischer Verbundwerkstoff nach Anspruch 4, bei dem der genannte anorganische Füllstoff Talkum ist.

6. Thermoplastischer Verbundwerkstoff nach Anspruch 1 bis 5, jedoch mit Weichmacher- und Gleitmittelgehalt.

7. Thermoplastischer Verbundwerkstoff nach Anspruch 1 bis 6, bei dem die genannten Hanffasern aus einer Gruppe, bestehend aus Ramie, Flachs, Hanf (von Cannabis sativa), Jute, Manilahanf und Sisalhanf gewählt werden.

8. Thermoplastischer Verbundwerkstoff nach Anspruch 1 bis 6, bei dem die genannten Hanffasern aus einer Gruppe, bestehend aus Ramie, Flachs, Hanf (von Cannabis sativa), Jute, Manilahanf und Sisalhanf gewählt werden.

9. Thermoplastischer Verbundwerkstoff nach Anspruch 1, bei dem 46 Gewichtsteile Hanffasern und 65 Gewichtsteile ligninhaltiger Füllstoff in Partikel-, Mehl- oder Schuppenform 100 Gewichtsteilen Polypropylen zugesetzt werden.

10. Thermoplastischer Verbundwerkstoff nach Anspruch 1, bei dem 110 Gewichtsteile Hanffasern und 5 Gewichtsteile ligninhaltige Füllstoffe in Partikel-, Mehl- oder Schuppenform 100 Gewichtsteilen Polypropylen zugesetzt werden.

11. Thermoplastischer Verbundwerkstoff nach Anspruch 1, bei dem 15 Gewichtsteile Hanf-Einzelfasern, 65 Gewichtsteile ligninhaltige Füllstoffe in Partikel-, Mehl- oder Schuppenform und 25 Gewichtsteile anorganischer Füllstoff 100 Gewichtsteilen Polypropylen zugesetzt werden.

12. Thermoplastische Verbundwerkstoffolien, die durch Extrudieren des in den vorstehenden Ansprüchen beschriebenen Werkstoffes hergestellt werden.

## Revendications

1. Un matériau composite thermoplastique à utiliser pour façonner des feuilletages minces extrudés, matériau comprenant une matrice thermoplastique avec des fibres de chanvre et des particules, farines ou écailles de charges ligneuses, uniformément dispersées dans la matrice, caractérisé par le fait que pour chaque 100 parties par poids de la matrice, il y a entre 15 et 110 parties de fibres de chanvre et entre 5 à 65 parties de charges ligneuses, pour fournir un total entre 80 et 115 parties par poids de chanvre et de charge.

2. Un matériau composite thermoplastique comme indiqué dans la revendication 1, dans lequel ladite matrice thermoplastique est sélectionnée parmi un groupe comprenant du polypropylène, du polyéthylène, un copolymère d'éthylène-propylène, un copolymère d'acrylonitrile-butadiène-styrène et du nylon.

3. Un matériau composite thermoplastique comme indiqué dans la revendication 2, dans lequel ladite matrice thermoplastique est du polypropylène.

4. Un matériau composite thermoplastique comme indiqué dans la revendication 1, comprenant encore entre 10 et 40 parties par poids de charges inorganiques.

5. Un matériau composite thermoplastique comme indiqué dans la revendication 4, dans lequel la charge inorganique est du talc.

6. Un matériau composite thermoplastique comme indiqué dans n'importe quelle revendication de 1 à 5, comprenant encore une quantité de plastifiant et/ou de lubrifiant.

7. Un matériau composite thermoplastique comme indiqué dans les revendications de 1 à 6, dans lequel ledites fibres de chanvre sont n'importe lesquelles sélectionnées parmi le groupe comprenant la ramie, le lin, le chanvre (obtenu de cannabis sativa), le jute, le chanvre de Manille et le sisal.

8. Un matériau composite thermoplastique comme indiqué dans n'importe laquelle des revendications de 1 à 6, dans lequel les fibres de chanvre en question sont sélectionnées parmi le groupe comprenant de la ramie, du lin, du chanvre (obtenu de cannabis sativa), du jute, du chanvre de Manille et du sisal.

9. Un matériau composite thermoplastique comme indiqué dans la revendication 1, dans lequel 46 parties de fibres de chanvre et 65 parties par poids de charge ligneuse particulaire, en farine ou en écailles sont ajoutées à 100 parties par poids de polypropylène.

10. Un matériau composite thermoplastique comme indiqué dans la revendication 1, dans lequel 110 parties par poids de fibres simples de chanvre et 5 parties par poids de charges ligneuses sous forme de particules, farines ou écailles sont ajoutées à 100 parties par poids de polypropylène.

11. Un matériau composite thermoplastique comme indiqué dans la revendication 1, dans lequel 15 parties par poids de fibres simples de chanvre, 65 parties par poids de charges ligneuses sous forme de particules, farines ou écailles et 25 parties par poids de charge inorganique sont ajoutées à 100 parties par poids de polypropylène.

12. Un feuilletage composite thermoplastique obtenu en extrudant un matériau comme indiqué dans n'importe quelle revendication précédente.
